# FASCICULE DE BREVET EUROPEEN

(11) **EP 2 101 057 B1**
(45) Date de publication et mention de la délivrance du brevet: **07.11.2012**
(21) Numéro de dépôt: 09290170.1
(22) Date de dépôt: 10.03.2009
(51) Int. Cl.: F02M 35/12, F16L 55/033

(54) **Dispositif d'atténuation acoustique pour ligne d'admission d'un moteur thermique, et ligne d'admission l'incorporant**
Vorrichtung zur Lärmreduzierung für Einspeiseleitung einer Wärmekraftmaschine und Einspeiseleitung, die diese Vorrichtung umfasst
Sound attenuation device for the intake line of a heat engine and intake line including same

(30) Priorité: 12.03.2008 FR 0801341
(43) Date de publication de la demande: 16.09.2009
(73) Titulaire: Hutchinson, 75008 Paris (FR)
(72) Inventeur: Caliskan, Alper, 45140 St Jean de la Ruelle (FR)
(74) Mandataire: Bolinches, Michel Jean-Marie

(56) Documents cités:
- EP-A- 0 491 465
- EP-A- 1 403 506
- EP-A- 1 433 948
- EP-A- 1 795 733
- DE-A1- 19 615 917
- JP-A- 4 109 071
- US-A- 3 323 613
- US-A- 4 865 154
- US-A- 5 333 576

## Description

La présente invention concerne un dispositif d'atténuation acoustique pour une ligne d'admission d'un moteur thermique à combustion interne, tel qu'un moteur turbocompressé pour véhicule automobile, et une telle ligne d'admission l'incorporant. L'invention s'applique à un tel dispositif d'atténuation à chambre(s) résonante(s) de type résonateur(s) de Helmholtz.

De manière connue, les dispositifs d'atténuation acoustique de lignes d'admission pour moteurs turbocompressés de véhicule automobile comportent une conduite qui est destinée à être parcourue par de l'air sous pression chargé d'huile et dont les extrémités d'entrée et de sortie d'air sont intégrées à cette ligne d'admission. On peut distinguer essentiellement deux types de ces dispositifs, comprenant :
- ceux à enveloppe tubulaire radialement externe avec les portions d'extrémités de laquelle est solidarisée une structure de conduite radialement interne formant deux chambres annulaires de résonance avec deux renflements respectifs de l'enveloppe, comme par exemple décrit dans le document DE-A1-199 56 172, et
- ceux à résonateurs de Helmholtz qui sont agencés radialement à l'extérieur d'une conduite de circulation d'air en étant séparés entre eux par des cloisons transversales et/ou longitudinales par rapport à la conduite et qui communiquent avec celle-ci par des ouvertures formées dans sa paroi, comme par exemple illustré dans le document EP-B-1 352 172.

Un inconvénient majeur des dispositifs d'atténuation connus de type à chambres annulaires de résonance réside dans leur encombrement relativement important ainsi que dans le nombre réduit de chambres de résonance formées qui est généralement limité à deux, ce qui pénalise les performances acoustiques pour une longueur de dispositif donnée.

Quant aux dispositifs d'atténuation connus de type à résonateurs de Helmholtz, ils présentent notamment l'inconvénient de procurer à plus ou moins long terme une atténuation acoustique insatisfaisante, tant pour les bruits de souffle générés par le moteur turbocompressé (se traduisant par des pulsations de pression dans les basses fréquences allant typiquement de 1300 à 2000 Hz environ) que pour les bruits de sifflement également générés par ce moteur (hautes fréquences au-delà de 2500 Hz environ).

Le document EP-A1-1 795 733 présente un dispositif d'atténuation acoustique selon le préambule de la revendication 1 annexée à la présente description.

Un but de la présente invention est de proposer un dispositif d'atténuation acoustique pour une ligne d'admission d'un moteur thermique à combustion interne, tel qu'un moteur turbocompressé pour véhicule automobile, qui remédie à ces inconvénients, ce dispositif étant destiné à être parcouru par un fluide gazeux sous pression et comportant :
- une structure de conduite qui présente une paroi tubulaire se terminant par deux extrémités respectivement d'entrée et de sortie du fluide aptes à être intégrées à ladite ligne d'admission, et
- au moins une chambre de résonance formant résonateur de Helmholtz qui est agencée à l'extérieur de cette structure de conduite et qui communique avec celle-ci par au moins une ouverture formée dans ladite paroi pour le passage dudit fluide, la ou chaque chambre étant délimitée axialement par deux cloisons sensiblement transversales à la direction axiale de cette structure.

A cet effet, un dispositif selon l'invention est tel que ladite ou chaque chambre de résonance comprend en outre au moins un orifice d'évacuation par gravité de condensats entraînés par ledit fluide, tels que de l'huile, qui est formé dans ladite paroi à proximité immédiate de l'une desdites cloisons transversales, ladite au moins une chambre comprenant plusieurs dites ouvertures de passage parallèles en forme de fentes oblongues en arcs de cercle s'étendant transversalement à ladite direction axiale en une zone axialement médiane de cette chambre par rapport à ces cloisons.

On notera que le ou chaque orifice d'évacuation de condensats prévu dans un résonateur de Helmholtz selon l'invention permet notamment d'éviter l'accumulation, dans le ou chaque résonateur, d'huile chaude et de poussières entraînées par le fluide en provenance du moteur et se condensant au contact des parois, accumulation qui forme à la longue un dépôt solide pâteux réduisant le volume utile de la chambre correspondante et pénalisant ainsi l'atténuation acoustique. En d'autres termes, cette évacuation par gravité des condensats que procure le dispositif d'atténuation selon l'invention permet ainsi de pérenniser les performances acoustiques du ou de chaque résonateur de Helmholtz qu'il comprend.

On notera également que le ou chaque orifice d'évacuation agencé selon l'invention permet en outre d'influencer avantageusement cette atténuation acoustique, en décalant vers les hautes fréquences la bande de fréquences qui correspond, sur la courbe d'atténuation acoustique, à une plage d'atténuation acoustique avec un niveau égal ou supérieur à un seuil donné (typiquement 20 dB).

Selon une autre caractéristique de l'invention, ledit ou chaque orifice d'évacuation peut être formé en un coin de la chambre correspondante qui est destiné à former le point le plus bas de celle-ci à l'état monté dans ladite ligne d'admission (i.e. la zone la plus inférieure en fonctionnement de ladite paroi formant le fond de la chambre).

On comprendra ainsi que la ou chaque chambre pourrait par exemple présenter non pas un, mais deux orifices d'évacuation identiques qui seraient formés axialement à l'opposé l'un de l'autre sur ladite paroi et dont l'un ou l'autre permettrait l'évacuation des condensats, selon sa position due à l'orientation de la structure de conduite une fois intégrée à la ligne d'admission.

On notera que le dispositif d'atténuation selon l'invention permet en particulier de générer des pertes de charge réduites pour le fluide y circulant ce qui contribue à améliorer les performances du moteur, en comparaison des dispositifs d'atténuation connus à deux chambres annulaires de résonance qui génèrent des pertes de charge plus élevées.

Selon une autre caractéristique de l'invention, ladite ou chaque chambre peut être de préférence agencée radialement à l'extérieur et axialement à l'intérieur de ladite structure de conduite.

A titre encore plus préférentiel, ladite ou chaque chambre de résonance peut présenter sensiblement une forme de parallélépipède rectangle tronqué par ladite paroi.

Avantageusement, ledit ou chaque orifice d'évacuation peut présenter une section de passage qui est inférieure à celle de chaque ouverture de passage pour ledit fluide et qui présente de préférence une forme sensiblement circulaire.

Selon une autre caractéristique de l'invention, ladite ou chaque chambre peut être délimitée transversalement par deux parois longitudinales qui s'étendent parallèlement à la direction axiale de ladite structure de conduite et qui sont reliées entre elles par lesdites cloisons transversales, et chaque ouverture de passage pour ledit fluide s'étend sensiblement de l'une de ces parois longitudinales à l'autre.

Ladite ou chaque chambre peut par exemple comporter deux ouvertures de passage parallèles qui sont formées en une zone axialement médiane pour cette chambre, et un unique orifice d'évacuation qui est de préférence distant de l'ouverture la plus proche d'une distance axiale supérieure à celle séparant les deux ouvertures entre elles.

Selon une autre caractéristique de l'invention, ce dispositif d'atténuation peut comprendre au moins une rangée desdites chambres de résonance qui se succèdent dans la direction axiale de ladite structure de conduite et qui sont toutes délimitées transversalement par deux mêmes parois longitudinales s'étendant parallèlement à cette direction axiale, les deux chambres d'extrémité de ladite ou chaque rangée pouvant être respectivement délimitées axialement par deux cloisons transversales d'extrémité qui relient ces deux parois longitudinales entre elles en formant avec elles un boîtier qui est fermé de manière étanche au fluide par un couvercle.

On notera que le dispositif d'atténuation selon l'invention peut ainsi avantageusement comporter un nombre élevé de résonateurs de Helmhotz pour un encombrement relativement réduit, notamment en comparaison des dispositifs d'atténuation connus à chambres annulaires de résonance, tout en étant adaptable à tout environnement pour son montage dans une ligne d'admission.

Avantageusement, ledit boîtier peut être formé d'un seul tenant avec ladite structure de conduite, ce qui réduit le coût global de fabrication du dispositif selon l'invention.

Encore plus avantageusement, ledit couvercle peut être soudé, d'une part, sur lesdites parois longitudinales dudit boîtier et, d'autre part, sur lesdites cloisons transversales agencées entre ces parois longitudinales.

Cette soudure du couvercle sur l'ensemble des parois et cloisons des résonateurs de Helmholtz permet de fermer durablement de manière étanche le boîtier, en évitant la déformation par courbure transversale des couvercles qui sont usuellement soudés sur le seul contour extérieur du boîtier (i.e. seulement sur les deux parois longitudinales et les deux cloisons transversales d'extrémité).

Une ligne d'admission selon l'invention d'un moteur thermique à combustion interne, tel qu'un moteur turbocompressé pour véhicule automobile, comporte au moins un dispositif d'atténuation acoustique selon l'invention tel que défini ci-dessus, dans lequel ledit ou chaque orifice d'évacuation est formé en un coin inférieur de la chambre de résonance correspondante pour permettre l'évacuation par gravité desdits condensats par cet orifice.

Comme indiqué précédemment, une utilisation préférentielle selon l'invention de ce dispositif d'atténuation acoustique consiste à atténuer les bruits de souffle et/ou de sifflements d'un moteur thermique à combustion interne, tel qu'un moteur turbocompressé pour véhicule automobile.

Ces bruits de souffle atténués par le dispositif de l'invention concernent notamment une plage de fréquences allant de 1300 à 2000 Hz. Quant à ces bruits de sifflements, ils se réfèrent en particulier à une plage de fréquences pouvant varier de 2500 à 3500 Hz environ.

D'autres avantages, caractéristiques et détails de l'invention ressortiront du complément de description qui va suivre en référence à des dessins annexés, donnés uniquement à titre d'exemples et dans lesquels :
la figure 1 est une vue de côté, en perspective et en écorché, d'un dispositif d'atténuation acoustique selon l'invention, et
la figure 2 est une vue de dessus et en perspective de l'intérieur du dispositif d'atténuation de la figure 1.

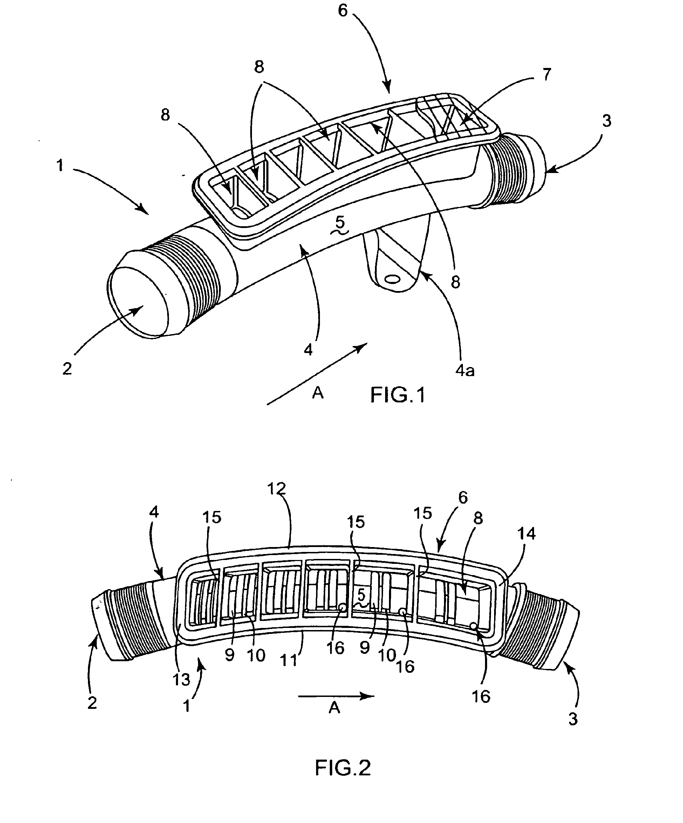

Le dispositif d'atténuation acoustique 1 selon un exemple de réalisation de l'invention qui est illustré aux figures 1 et 2 est destiné à être intégré à une ligne d'admission d'air d'un moteur turbocompressé pour véhicule automobile, via ses deux extrémités respectives de raccordement 2 et 3 pour l'entrée et la sortie d'air sous pression. Ce dispositif 1 comporte essentiellement :
- une conduite 4 qui présente une paroi tubulaire 5 globalement cylindrique se terminant par ces deux extrémités de raccordement 2 et 3 et qui est pourvue d'un support de fixation 4a, et
- un boîtier 6 de section sensiblement rectangulaire qui est fermé de manière étanche par un couvercle 7 (voir figure 1) et qui contient une pluralité de chambres de résonance 8 - six dans cet exemple - formant autant de résonateurs de Helmholtz se succédant dans la direction axiale A de la conduite 4 et communiquant chacun avec l'intérieur de celle-ci par des fentes 9 et 10 (visibles à la figure 2), ce boîtier 6 étant de préférence formé d'un seul tenant avec la conduite 4 en la surmontant radialement vers l'extérieur et étant délimité par deux parois longitudinales 11 et 12 reliées entre elles par deux parois ou cloisons transversales d'extrémité 13 et 14.

Comme illustré à la figure 2, chaque chambre de résonance 8 présente sensiblement une forme de parallélépipède rectangle tronqué par la paroi 5 formant son fond et par le couvercle 7 formant son sommet, et elle est délimitée par les deux parois longitudinales 11 et 12 du boîtier 6 (qui s'étendent parallèlement à la direction axiale A de la conduite 4) et par deux cloisons transversales 13, 14, 15 (perpendiculaires à cette direction axiale A). Chaque chambre 8 présente par exemple une paire de fentes oblongues 9 et 10 parallèles pour le passage de l'air qui sont formées en son fond dans la paroi 5 de la conduite 4 et transversalement à la direction axiale A, en une zone axialement médiane pour cette chambre 8. Chaque fente transversale 9, 10 présente de préférence une forme en arc de cercle qui s'étend sensiblement de l'une des parois longitudinales 11 à l'autre 12.

Selon la présente invention, chaque chambre de résonance 8 comprend en son fond, en plus de ces fentes 9 et 10 permettant la circulation de l'air issu de la conduite 4, au moins un orifice 16 apte à évacuer par gravité l'huile condensée et les poussières dont l'air est chargé et qui viennent se loger en fonctionnement dans chaque chambre 8, cet orifice 16 étant formé dans la paroi 5 à proximité immédiate d'une extrémité de celle des deux cloisons transversales 14, 15 délimitant cette chambre 8 qui est destinée à former son point le plus bas à l'état monté dans la ligne d'admission d'air (i.e. dans le coin le plus bas de la chambre 8 en fonctionnement).

Comme visible à la figure 2, l'orifice d'évacuation 16 de chaque chambre 8 présente de préférence une forme circulaire et une section de passage qui est très réduite en comparaison de celle de chaque fente 9, 10, et cet orifice 16 est avantageusement distant de la fente 10 la plus proche d'une distance axiale supérieure à celle séparant les deux fentes 9 et 10 entre elles.

Comme indiqué précédemment, ces orifices d'évacuation 16 permettent, d'une part, d'éviter la formation dans chaque résonateur 8 d'un dépôt solide d'huile et de poussières réduisant son volume utile, pérennisant ainsi les performances acoustiques obtenues et, d'autre part, d'influencer l'atténuation acoustique en décalant vers les hautes fréquences la bande correspondant à une plage d'atténuation acoustique avec un niveau égal ou supérieur à 20 dB, typiquement.

Le boîtier 6 à résonateurs de Helmholtz 8 est avantageusement fermé en son sommet par le couvercle 7 via un soudage réalisé à la fois sur les parois longitudinales 11 et 12 du boîtier 6 et sur l'ensemble des cloisons transversales 13, 14, 15 (i.e. cloisons d'extrémité 13 et 14 ou intermédiaires 15) agencées entre ces parois longitudinales 11 et 12. Il en résulte que l'on minimise ainsi la déformation par courbure transversale du couvercle 7 et donc de chaque chambre 8, en comparaison d'un couvercle de l'art antérieur qui serait soudé seulement sur les deux parois longitudinales 11 et 12 et sur les deux cloisons transversales d'extrémité 13 et 14. Afin d'améliorer encore la rigidité du couvercle 7 pour ne pas pénaliser la performance acoustique par altération du volume de chaque chambre 8, dans des conditions d'utilisation dynamiques, on notera qu'il est également possible de prévoir sur la paroi de ce couvercle 7 des nervures par exemple transversales (i.e. parallèles aux cloisons).

## Revendications

1. Dispositif d'atténuation acoustique (1) pour une ligne d'admission d'un moteur thermique à combustion interne, tel qu'un moteur turbocompressé pour véhicule automobile, ce dispositif étant destiné à être parcouru par un fluide gazeux sous pression et comportant :
- une structure de conduite (4) qui présente une paroi tubulaire (5) se terminant par deux extrémités respectivement d'entrée (2) et de sortie (3) du fluide aptes à être intégrées à ladite ligne d'admission, et
- au moins une chambre de résonance (8) formant résonateur de Helmholtz qui est agencée à l'extérieur de cette structure de conduite et qui communique avec celle-ci, en un fond de cette chambre, par au moins une ouverture (9, 10) formée dans ladite paroi pour le passage dudit fluide, la ou chaque chambre étant délimitée axialement par deux cloisons (15 ou 13, 14) sensiblement transversales à la direction axiale (A) de cette structure,
**caractérisé en ce que** ladite ou chaque chambre de résonance comprend en outre au moins un orifice d'évacuation par gravité (16) de condensats entraînés par ledit fluide, tels que de l'huile, qui est formé en ledit fond de chambre dans ladite paroi à proximité immédiate de l'une desdites cloisons transversales (14 ou 15), ladite au moins une chambre de résonance comprenant plusieurs dites ouvertures de passage (9, 10) parallèles en forme de fentes oblongues en arcs de cercle s'étendant transversalement à ladite direction axiale en une zone axialement médiane de cette chambre par rapport à ces cloisons.

2. Dispositif (1) selon la revendication 1, **caractérisé en ce que** ledit ou chaque orifice d'évacuation (16) est formé en un coin de la chambre correspondante (8) qui est destiné à former le point le plus bas de celle-ci à l'état monté dans ladite ligne d'admission.

3. Dispositif (1) selon la revendication 2, **caractérisé en ce que** ladite ou chaque chambre (8) est agencée radialement à l'extérieur et axialement à l'intérieur de ladite structure de conduite (4).

4. Dispositif (1) selon la revendication 3, **caractérisé en ce que** ladite ou chaque chambre (8) présente sensiblement une forme de parallélépipède rectangle tronqué par ladite paroi (5).

5. Dispositif (1) selon une des revendications précédentes, **caractérisé en ce que** ledit ou chaque orifice d'évacuation (16) présente une section de passage qui est inférieure à celle de ladite ou chaque ouverture de passage (9, 10) pour ledit fluide et qui présente de préférence une forme sensiblement circulaire.

6. Dispositif (1) selon une des revendications précédentes, ladite ou chaque chambre (8) étant délimitée transversalement par deux parois longitudinales (11 et 12) qui s'étendent parallèlement à la direction axiale (A) de ladite structure de conduite (4) et qui sont reliées entre elles par lesdites cloisons transversales (13, 14, 15), **caractérisé en ce que** ladite ou chaque ouverture de passage (9, 10) pour ledit fluide s'étend sensiblement de l'une de ces parois longitudinales à l'autre.

7. Dispositif (1) selon la revendication 6, **caractérisé en ce que** ladite ou chaque chambre (8) comporte deux dites ouvertures de passage (9 et 10) parallèles et un unique orifice d'évacuation (16) qui est de préférence distant de l'ouverture la plus proche (10) d'une distance axiale supérieure à celle séparant ces deux ouvertures entre elles.

8. Dispositif (1) selon une des revendications précédentes, **caractérisé en ce qu'**il comprend au moins une rangée desdites chambres de résonance (8) qui se succèdent dans la direction axiale (A) de ladite structure de conduite (4) et qui sont toutes délimitées transversalement par deux mêmes parois longitudinales (11 et 12) s'étendant parallèlement à cette direction axiale, les deux chambres d'extrémité de ladite ou chaque rangée étant respectivement délimitées axialement par deux cloisons transversales d'extrémité (13 et 14) qui relient ces deux parois longitudinales entre elles en formant avec elles un boîtier (6) qui est fermé de manière étanche audit fluide par un couvercle (7).

9. Dispositif (1) selon la revendication 8, **caractérisé en ce que** ledit boîtier (6) est formé d'un seul tenant avec ladite structure de conduite (4).

10. Dispositif (1) selon la revendication 8 ou 9, **caractérisé en ce que** ledit couvercle (7) est soudé, d'une part, sur lesdites parois longitudinales (11 et 12) dudit boîtier (6) et, d'autre part, sur lesdites cloisons transversales (13, 14, 15) agencées entre ces parois longitudinales.

11. Ligne d'admission d'un moteur thermique à combustion interne, tel qu'un moteur turbocompressé pour véhicule automobile, **caractérisée en ce qu'**elle comporte au moins un dispositif d'atténuation acoustique (1) selon une des revendications précédentes, dans lequel ledit ou chaque orifice d'évacuation (16) est formé en un coin inférieur de la chambre de résonance (8) correspondante pour permettre l'évacuation par gravité desdits condensats par cet orifice.

12. Utilisation d'un dispositif d'atténuation acoustique (1) selon une des revendications 1 à 10 pour atténuer les bruits de souffle et/ou de sifflements d'un moteur thermique à combustion interne, tel qu'un moteur turbocompressé pour véhicule automobile.

## Claims

1. Sound attenuation device (1) for an intake line of an internal combustion engine, such as a turbocharged engine for an automotive vehicle, this device being designed for circulating a pressurised gaseous fluid and comprising:
- a pipe structure (4) having a tubular wall (5) terminating in two ends, respectively an inlet (2) and outlet (3) for the fluid designed to be integrated in said intake line, and
- at least one resonance chamber (8) forming a Helmholtz resonator which is disposed on the exterior of this pipe structure and which communicates with it at a base of this chamber by means of at least one aperture (9, 10) in said wall to provide a passage for said fluid, the or each chamber being axially delimited by two partitions (15 or 13, 14) extending substantially transversely to the axial direction (A) of this structure, **characterised in that** said or each resonance chamber further comprises at least one orifice (16) for evacuating by gravity condensates entrained by said fluid, such as oil, which is disposed at said chamber base in said wall directly adjacent to one of said transverse partitions (14 or 15), said at least one resonance chamber comprising several of said parallel passage apertures (9, 10) in the form of oblong slots extending in circle arcs transversely to said axial direction in an axially median zone of this chamber relative to these partitions.

2. Device (1) as claimed in claim 1, **characterised in that** said or each evacuation orifice (16) is disposed in a corner of the corresponding chamber (8) which is designed to constitute the lowest point thereof in the state fitted in said intake line.

3. Device (1) as claimed in claim 2, **characterised in that** said or each chamber (8) is disposed radially on the outside and axially on the inside of said pipe structure (4).

4. Device (1) as claimed in claim 3, **characterised in that** said or each chamber (8) essentially has the shape of a rectangular parallelepiped truncated by said wall (5).

5. Device (1) as claimed in one of the preceding claims, **characterised in that** said or each evacuation orifice (16) has a passage section which is smaller than that of said or each passage aperture (9, 10) for said fluid and which is preferably of a substantially circular shape.

6. Device (1) as claimed in one of the preceding claims, said or each chamber (8) being transversely delimited by two longitudinal walls (11 and 12) which extend parallel to the axial direction (A) of said pipe structure (4) and which are connected to one another by said transverse partitions (13, 14, 15), **characterised in that** said or each passage aperture (9, 10) for said fluid essentially extends from one of these longitudinal walls to the other.

7. Device (1) as claimed in claim 6, **characterised in that** said or each chamber (8) has two of said parallel passage apertures (9 and 10) and a single evacuation orifice (16) which is preferably spaced apart from the closest aperture (10) by a distance greater than that separating these two apertures from one another.

8. Device (1) as claimed in one of the preceding claims, **characterised in that** it comprises at least one row of said resonance chambers (8) which are disposed consecutively in the axial direction (A) of said pipe structure (4) and all of which are transversely delimited by two same longitudinal walls (11 and 12) extending parallel with this axial direction, the two end chambers of said or each row being respectively axially delimited by two end transverse partitions (13 and 14) which connect these two longitudinal walls to one another forming in conjunction with them a case (6) which is closed by a cover (7) so as to be sealed with respect to said fluid.

9. Device (1) as claimed in claim 8, **characterised in that** said case (6) is integral with said pipe structure (4).

10. Device (1) as claimed in claim 8 or 9, **characterised in that** said cover (7) is welded to said longitudinal walls (11 and 12) of said case (6) on the one hand and to said transverse partitions (13, 14, 15) disposed between these longitudinal walls on the other hand.

11. Intake line of an internal combustion engine, such as a turbocharged engine for an automotive vehicle, **characterised in that** it comprises at least one sound attenuation device (1) as claimed in one of the preceding claims, in which said or each evacuation orifice (16) is disposed in a bottom corner of the corresponding resonance chamber (8) to enable said condensates to be evacuated through this orifice by gravity.

12. Use of a sound attenuation device (1) as claimed in one of claims 1 to 10 to attenuate blowing and/or whistling noises of an internal combustion engine, such as a turbocharged engine for an automotive vehicle.

## Patentansprüche

1. Schalldämpfungsvorrichtung (1) für eine Zufuhrleitung eines Verbrennungsmotors, wie eines Turbomotors für ein Kraftfahrzeug, wobei diese Vorrichtung dazu bestimmt ist, von einem gasförmigen Druckfluid durchströmt zu werden, und umfasst:
- eine Leitungsstruktur (4), die eine rohrförmige Wand (5) aufweist, welche mit zwei Enden für den Eintritt (2) bzw. den Austritt (3) des Fluids abschließt, die geeignet sind, in die Zufuhrleitung integriert zu werden, sowie
- wenigstens eine einen Helmholtz-Resonator bildende Resonanzkammer (8), die außerhalb dieser Leitungsstruktur angeordnet ist und die mit dieser an einem Boden dieser Kammer über wenigstens eine Öffnung (9, 10), welche in der Wand für den Durchgang des Fluids ausgebildet ist, in Verbindung steht, wobei die oder jede Kammer durch zwei Trennwände (15 oder 13, 14), die zu der axialen Richtung (A) dieser Struktur im Wesentlichen quer verlaufen, axial begrenzt ist,
**dadurch gekennzeichnet, dass** die oder jede Resonanzkammer ferner wenigstens eine Öffnung zum Ableiten mittels Schwerkraft (16) von durch das Fluid mitgeführten Kondensaten, wie Öl, umfasst, die an dem Kammerboden in der Wand in unmittelbarer Nähe von einer der Quertrennwände (14 oder 15) ausgebildet ist, wobei die wenigstens eine Resonanzkammer mehrere parallele Durchgangsöffnungen (9, 10) in Form von kreisbogenförmigen länglichen Schlitzen umfasst, die quer zu der axialen Richtung in einem axial mittleren Bereich dieser Kammer gegenüber diesen Trennwänden verlaufen.

2. Vorrichtung (1) nach Anspruch 1, **dadurch gekennzeichnet, dass** die oder jede Ableitungsöffnung (16) in einer Ecke der entsprechenden Kammer (8) ausgebildet ist, welche dazu bestimmt ist, den untersten Punkt dieser in dem in der Zufuhrleitung montierten Zustand zu bilden.

3. Vorrichtung (1) nach Anspruch 2, **dadurch gekennzeichnet, dass** die oder jede Kammer (8) radial außerhalb und axial innerhalb der Leitungsstruktur (4) angeordnet ist.

4. Vorrichtung (1) nach Anspruch 3, **dadurch gekennzeichnet, dass** die oder jede Kammer (8) im Wesentlichen die Form eines durch die Wand (5) verkürzten Quaders aufweist.

5. Vorrichtung (1) nach einem der vorhergehenden Ansprüche, **dadurch gekennzeichnet, dass** die oder jede Ableitungsöffnung (16) einen Durchlassquerschnitt aufweist, der kleiner als derjenige der oder jeder Durchgangsöffnung (9, 10) für das Fluid ist und der vorzugsweise im Wesentlichen eine Kreisform aufweist.

6. Vorrichtung (1) nach einem der vorhergehenden Ansprüche, wobei die oder jede Kammer (8) durch zwei Längswände (11 und 12) quer begrenzt ist, die parallel zur axialen Richtung (A) der Leitungsstruktur (4) verlaufen und die durch die Quertrennwände (13, 14, 15) untereinander verbunden sind, **dadurch gekennzeichnet, dass** die oder jede Durchgangsöffnung (9, 10) für das Fluid sich im Wesentlichen von einer dieser Längswände zur anderen erstreckt.

7. Vorrichtung (1) nach Anspruch 6, **dadurch gekennzeichnet, dass** die oder jede Kammer (8) zwei parallele Durchgangsöffnungen (9 und 10) sowie eine einzige Ableitungsöffnung (16) umfasst, die vorzugsweise von der nächstgelegenen Öffnung (10) um einen axialen Abstand entfernt ist, welcher größer als der diese beiden Öffnungen voneinander trennende ist.

8. Vorrichtung (1) nach einem der vorhergehenden Ansprüche, **dadurch gekennzeichnet, dass** sie wenigstens eine Reihe der Resonanzkammern (8) umfasst, die in der axialen Richtung (A) der Leitungsstruktur (4) aufeinander folgen und die alle durch zwei gleiche Längswände (11 und 12), welche zu dieser axialen Richtung parallel verlaufen, quer begrenzt sind, wobei die beiden endseitigen Kammern der oder jeder Reihe jeweils axial durch zwei endseitige Quertrennwände (13 und 14) begrenzt sind, die diese beiden Längswände unter Bildung - mit ihnen- eines Gehäuses (6), das durch einen Deckel (7) fluiddicht abgeschlossen ist, untereinander verbinden.

9. Vorrichtung (1) nach Anspruch 8, **dadurch gekennzeichnet, dass** das Gehäuse (6) einstückig mit der Leitungsstruktur (4) ausgebildet ist.

10. Vorrichtung (1) nach Anspruch 8 oder 9, **dadurch gekennzeichnet, dass** der Deckel (7) einerseits an die Längswände (11 und 12) des Gehäuses (6) und andererseits an die Quertrennwände (13, 14, 15), die zwischen diesen Längswänden angeordnet sind, geschweißt ist.

11. Zufuhrleitung eines Verbrennungsmotors, wie eines Turbomotors für ein Kraftfahrzeug, **dadurch gekennzeichnet, dass** sie wenigstens eine Schalldämpfungsvorrichtung (1) nach einem der vorhergehenden Ansprüche umfasst, wobei die oder jede Ableitungsöffnung (16) in einer unteren Ecke der entsprechenden Resonanzkammer (8) ausgebildet ist, um das Ableiten der Kondensate mittels Schwerkraft über diese Öffnung zu ermöglichen.

12. Verwendung einer Schalldämpfungsvorrichtung (1) nach einem der Ansprüche 1 bis 10, zum Dämpfen der Rausch- und/oder Pfeifgeräusche eines Verbrennungsmotors, wie eines Turbomotors für ein Kraftfahrzeug.
